(19) **Europäisches Patentamt**

**European Patent Office**

**Office européen des brevets**

(11) Veröffentlichungsnummer: **0 204 879**

**B1**

(12) **EUROPÄISCHE PATENTSCHRIFT**

(45) Veröffentlichungstag der Patentschrift:
06.12.89

(51) Int. Cl.⁴: **B 65 F 1/00,** E 01 H 1/08,
B 62 B 3/08

(21) Anmeldenummer: 85810377.3

(22) Anmeldetag: 19.08.85

(54) **Einrichtung zur Aufnahme von Abfallgut.**

(30) Priorität: 14.06.85 CH 2524/85

(43) Veröffentlichungstag der Anmeldung:
17.12.86 Patentblatt 86/51

(45) Bekanntmachung des Hinweises auf die Patenterteilung:
06.12.89 Patentblatt 89/49

(84) Benannte Vertragsstaaten:
AT BE CH DE FR LI NL

(56) Entgegenhaltungen:
CH-A-417 663
CH-A-647 988
DE-U-8 410 509

(73) Patentinhaber: Brändle Metallbau AG, Sonnhalden,
CH- 9607 Mosnang (CH)

(72) Erfinder: Brändle, Rudolf, Nettenberg, CH- 9607
Mosnang (CH)

(74) Vertreter: Klunker . Schmitt- Nilson . Hirsch,
Winzererstrasse 106, D-8000 München 40 (DE)

EP 0 204 879 B1

## Beschreibung

Die Erfindung bezieht sich auf eine Einrichtung gemäß Oberbegriff des Anspruchs 1.

Bei einer bekannten Einrichtung dieser Art (CH-A-647 988) ist das Sauggerät auf einem festen Deckelbereich des Behältnisses angebracht. Wenn das Behältnis zum Entleeren festen Abfallguts gekippt wird, muß das schwere Sauggerät mit gekippt werden. Selbst wenn man ein vorheriges Abnehmen des festen Deckelteils mitsamt dem Sauggerät ins Auge fassen würde, wäre dies umständlich, weil man das Deckelteil mitsamt dem schweren Sauggerät vor dem Kippen des Behältnisses irgendwo ablegen müßte. Die bekannte Einrichtung ist insgesamt auf Rollen verfahrbar.

Der Erfindung liegt die Aufgabe zugrunde, eine Einrichtung zu schaffen, bei der sich das Behältnis bequemer und leichter entleeren läßt.

Zur Lösung dieser Aufgabe ist die Einrichtung erfindungsgemäß so ausgebildet wie im kennzeichnenden Teil des Anspruchs 1 angegeben.

Aus der CH-A-417 663 ist eine insgesamt verfahrbare Einrichtung zur Aufnahme von Abfallgut in einem tonnenartigen Behältnis bekannt, die ein der Abfalltonne vorgeschaltetes Sauggerät aufweist, das über eine Druckleitung und einen luftdurchlässigen Fangsack an die Abfalltonne angeschlossen ist. Zum Entleeren der Abfalltonne ist der Fangsack von dieser lösbar. Die Abfalltonne muß von Hand von dem verfahrbaren Gesamtgestell der Einrichtung gehoben und zu der Entleerungsstelle getragen werden.

Bevorzugte Ausgestaltungen der Erfindung sind in den Ansprüchen 2 bis 13 angegeben.

Mittels der erfindungsgemäßen Einrichtung läßt sich aufgenommenes Abfallgut möglichst unmittelbar trennen und lassen sich die derart gewonnenen Abfallgutanteile auf kurzem Wege der Wiederverwertung, vorzugsweise durch die jeweilige Abfallgutquelle, zuführen, sofern diese Anteile nicht der Entsorgung zugeführt werden müssen. Das Abfallgutrecycling ist in organisatorischer, technologischer und nicht zuletzt betriebswirtschaftlicher Hinsicht im betroffenen Kreislauf weitgehend unmittelbar verwirklichbar.

Die Erfindung und Ausgestaltungen der Erfindung werden nachfolgend anhand von zeichnerisch dargestellten Ausführungsbeispielen noch näher erläutert. Es zeigen:

Fig. 1 eine Parallelperspektive einer Einrichtung, bestehend aus einem Behältnis sowie einem mit diesem lösbar verbundenen Sauggerät,

Fig. 2 weitere Verbesserungen des Behältnisses der Einrichtung insbesondere hinsichtlich Abfalltrennung- sowie rückgewinnung, ebenfalls in parallelperspektivischer Ansicht,

Fig. 3 ein Schema einer teilweise stationären Einrichtung mit einem ortsbeweglichen Behältnis in Seitenansicht,

Fig. 4 eine schematische Seitenansicht und teilweise die innere Ausgestaltung einer Einrichtung ohne Traggestell im Schnitt,

Fig. 5 eine parallelperspektive eines Filters bzw. eines Filtereinsatzes für das Behältnis;

Fig. 6 eine Variante der Ausführung gemäss Figur 1 in Leichtbauausführung für die Aufnahme von geringeren Mengen von Abfallgut mit Handbetätigung der Einrichtung in parallelperspektivischer Darstellung,

Fig. 7 eine Parallelperspektive einer Einrichtung nach Fig. 6 ohne Sauggerät in gekippter Lage,

Fig. 8 eine stationär angeordnetes Sauggerät in der gleichen Darstellungsweise und

Fig. 9 ein Schema in Seitenansicht einer Anordnung von Behältnissen sowie einer Einrichtung gemäss der Erfindung unter Weglassung dessen Traggestells.

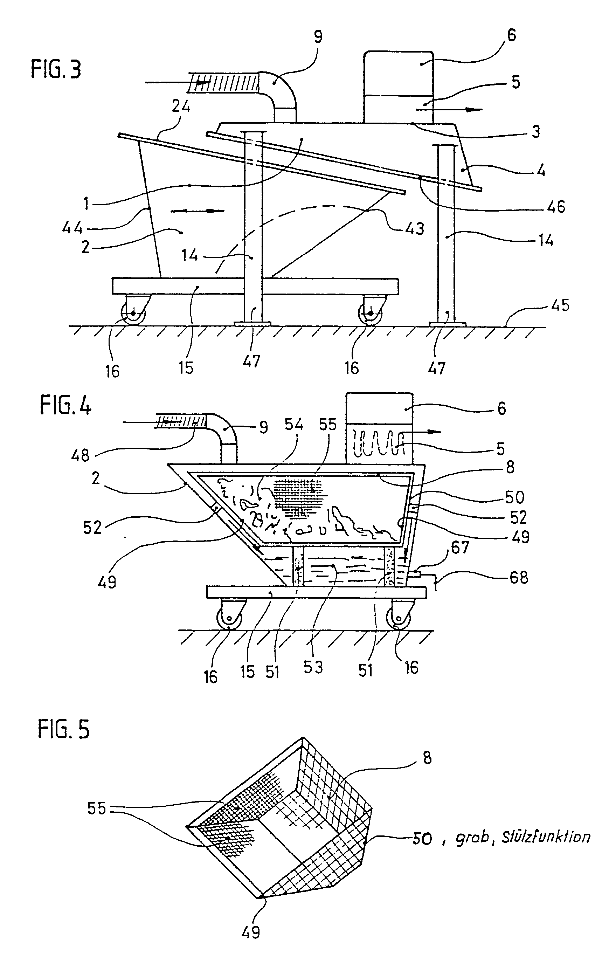

In Figur sind der parallelperspektivischen Darstellung der Einrichtung diese gesamthaft mit 1, deren Behältnis mit 2, ein Abfallgutförder- und transportteil bzw. Sauggerät mit 3, ein das Behältnis bzw. die Mulde oder Tonne 2 hermetisch abschliessender Deckel mit 4, ein über eine Deckelöffnung mit dem Inneren des Behältnisses 2 verbundener und auf dem Deckel 2 angeordneter Filter mit 5, ein dem Filter 5 nachgeschaltetes Saugzuggebläse mit 6, dessen Abluftaustritt mit 7, ein Filterteil (siehe Fig. 4 und 5) mit 8, ein Abfallguteintritt durch den Deckel 4 mit 9, ein Saugzugluft- sowie Abfallgutausgang am Deckel 4 mit 10, Hilfsrollen oder Rollen eines Transportgestelles mit 11, das Transportgestell bzw. Traggestell selbst mit 12, eine Absenk- sowie Anhebhydraulik zur Verlängerung sowie Verkürzung der teleskopartig ausgebildeten Gestellbeine 14 mit 13, der Rahmen des Behältnisses bzw. der Mulde oder Tonne 2 mit 15 und die Rahmenrollen bzw. Rahmenhilfsrollen mit 16 bezeichnet. Die Absenk- sowie Anhebhydraulik 13 ist zwischen zwei Querstreben 17 zwischen zwei benachbarten Gestellbeinen 14 derart angeordnet, dass die rollenseitigen und teleskopartig in den feststehenden Beinteilen 18 verschiebbaren Beinteile 19 durch entsprechende Betätigung der Hydraulik 13 aus den Teilen 18 ausgefahren, die Gestellbeine 14 dadurch verlängert und demzufolge das Sauggerät 3 samt Deckel 4 vom Behältnis bzw. der Mulde 2 abgehoben wird, wodurch das Behältnis 2 mittels der Rahmen- bzw. Hilfsrollen 16 unabhängig vom Traggestell 12 und auch das Traggestell 12 mittels der Rollen bzw. Hilfsrollen 11 vom jeweiligen Standort der Einrichtung 1 beliebig weggefahren bzw. abtransportiert werden kann. Ein dadurch erreichter Vorteil ist darin zu sehen, dass durch die derart verwirklichte Trennung des Behältnisses 2 vom Sauggerät 3 beide Teile je nach Erfordernis an den Stellen zum Einsatz gelangen können, wo sie fallweise benötigt werden, wobei das Behältnis 2 nicht durch das Sauggerät 3 belastet ist und ausserdem das Sauggerät 3 mehrfach an verschiedenen Stellen zum Zusammenwirken mit anderen Behältnissen 2 einsetzbar ist. Das Saugzuggebläse 6 ist mittels einer zwischen diesem einerseits und dem Transportgestell 12 andererseits angeordneten weiteren Hydraulik 20 vom Filter 5 abhebbar. Die Betätigung der Hydrauliken 13 und 20 kann mittels einer Handölpresse 21 erfolgen, die mittels eines Handhebels 22 betätigbar ist. Mit zunehmender Grösse der Behältnisse 2 sind diese im gefüllten Zustand infolge ihres relativ grossen Gewichtes immer schwerer zu handhaben bzw. zu befördern sowie zu entleeren. Anhand der beispielsweise dargestellten Einrichtung 1 wird gezeigt, wie das Sauggerät 3 vom Behältnis 2 abgetrennt wird, so dass das Sauggerät 3 nicht mehr mit dem Behältnis 2 mitbewegt werden muss, sondern insbesondere an Ort und Stelle verbleiben kann, so dass in weiterer Folge das Behältnis 2 allein weggeschoben werden kann oder mittels eines in die Bügel 23 des Rahmens 15 eingreifenden Hubstaplers beförderbar ist und, vom Sauggerät 3 entlastet, leichter entleert werden kann. Die Trennung der Teile 2 und 3 erfolgt demnach durch vertikales Abheben des Sauggeräts 3 sowie dessen horizontales Verfahren weg vom Teil 2.

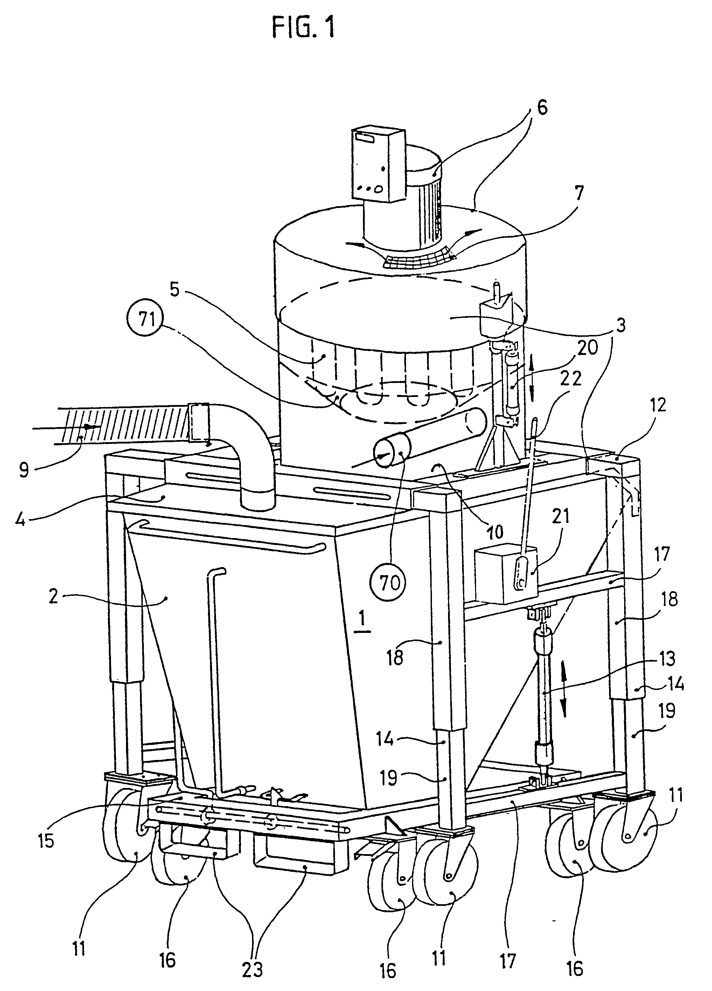

Selbstverständlich kann zummindest das Sauggerät 3 an Ort und Stelle verbleiben, wenn dessen Einsatz anderenorts nicht geboten ist, wogegen das Behältnis 2 z. B. zu einer Spänezammelmulde gebracht und dort entleert werden kann. Ein weiterer Vorteil der Einrichtung 1 besteht darin, dass bei stationärer Anordnung des Sauggeräts 3 der Filter 5 mit dem Saugzuggebläse 6 so gross dimensioniert werden kann, dass sich gleichzeitig mehrere an dem Abfallgutförderteil 3 bzw. dessen Behältnis 2 angeschlossene, stationär angeordnete und jeweils mit einem Deckel 4 abgeschlossene Behältnisse 2 an verschiedenen Orten befinden können. In Variation des Abfallguteintrittes 9 ist in Fig. 1 noch eine andere Anordnung des Abfallguteintrittes 70 am zylindrischen Teil des Filters 5 dargestellt, durch welche Eintrittsanordnung zusammen mit einem konischen Mantel 71 durch Zyklonwirkung eine Verbesserung der Trennung des zugeführten Abfallgutes von der Saugzugluft erreicht wird. Weitere Vorteile der Einrichtung 1 sind darin zu sehen, dass durch das Abheben des Sauggeräts 3 vom Behältnis 2 einerseits sowie durch das Abheben des Saugzuggebläses 6 andererseits bei gegebenenfalls gleichzeitigem Verschieben des Behältnisses 2 der Filter 5 von beiden Seiten, insbesondere von oben, besser zugänglich ist, so dass der Filter 5 bzw. dessen Filterkerzen oder das Filtergewebe mechanisch, insbesondere von Hand, leichter gereinigt oder mittels Gebläsegegendruck gesäubert werden kann, wobei der Schmutz in das unter Umständen darunter stehengelassene Behältnis 2 fällt, oder der Filter 5 überhaupt leichter ausgewechselt werden kann und auch im allgemeinen das Service der Einrichtung 1 sehr erleichtert wird.

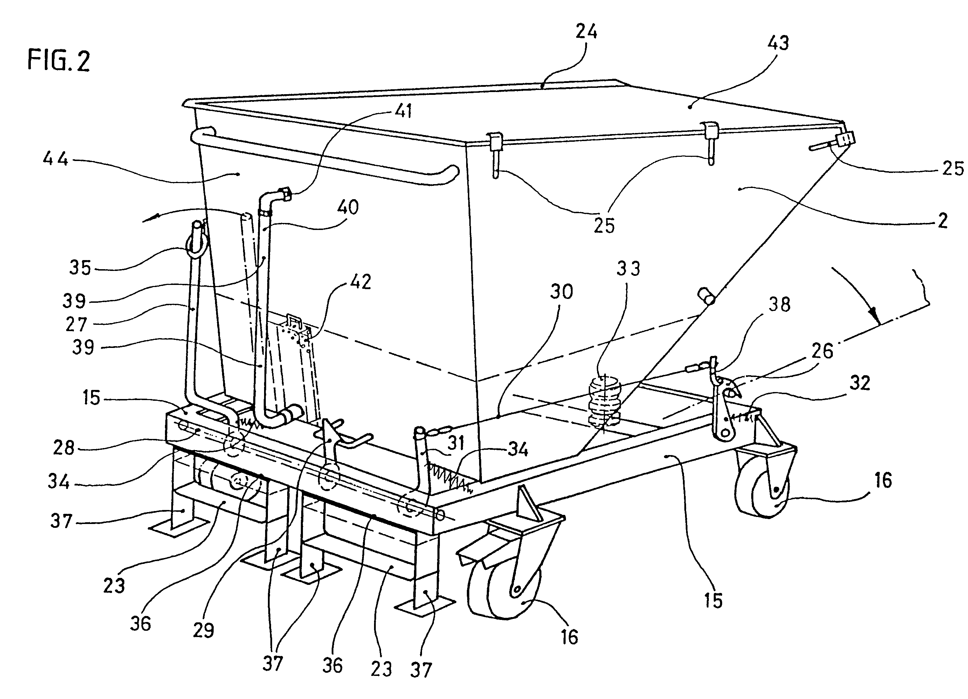

In Figur 2 sind weitere Verbesserungen des Behältnisses 2 insbesondere in Hinblick auf ein mittels der Einrichtung 1 aufbaubares System zur Abfalltrennung und Abfallrückgewinnung beschrieben und hierbei Abbildungsteile, die denen in der Figur 1 entsprechen, gleich wie in dieser bezeichnet. Die Dichtkante, an die der Deckel 4 hermetisch dicht angrenzt, ist mit 24, die Schnellverschlüsse, mittels der der Deckel 4 gegen die Dichtkante 24 angedrückt wird, sind mit 25 bezeichnet. Um bei zunehmender Grösse des Behältnisses 2 bei gefülltem und deshalb sehr schwerem Behältnis 2 bei dessen Kippen bzw. Entleeren dieses in der gekippten Lage zu stabilisieren, ist eine Stabilisierklinke 26 vorgesehen, die das Behältnis 2 in dessen Entleerungsposition bzw. gekippten Lage festhält, so dass auch bei nicht vollständiger Entleerung des Behältnisses 2 oder bei einer Füllung insbesondere mit klebrigem Abfallgut dieses z. B. durch Rütteln insbesondere mittels eines das Behältnis 2 befördernden Hubstaplers oder auch auf andere Weise aus dem Behältnis 2 entfernt werden kann, ohne dass dieses in die nichtgekippte bzw. leere Ausgangslage oder eine unkontrollierbare Zwischenlage gelangt. Die Betätigung der Stabilisierungsklinke 26 erfolgt mittels eines Klinkenhebels 27 über eine Welle 28, mittels der beim Entleeren des Behältnisses 2 auch eine Fixierklinke 29 entklinkt und dadurch das Behältnis 2 zum Kippen freigegeben wird, wobei gleichzeitig mittels eines Seilzuges 30 sowie Hebel 31 die Stabilisierklinke 26 betätigt wird, die bei Loslassen des Klinkenhebels 27 in der gekippten Lage des Behältnisses 2 wieder einklinkt und dadurch das Behältnis 2 in dessen gekippter Lage stabilisiert. Das System, gebildet aus den Teilen 27, 28, 30, 31, 26 und 29, erfüllt demnach eine doppelte Aufgabe. Mit 32 ist eine Klinkenhaltefeder der Stabilisierungsklinke 26 bezeichnet, deren Wirkung durch Ziehen des Klinkenhebels 27 aufgehoben wird, wodurch das Behältnis 2 wieder in seine Ruhelage zurückkippen kann, wobei gleichzeitig die Fixierklinke 29 einrastet und dadurch das Behältnis 2 festgehalten wird. Um infolge der grossen Kapazität und somit des grossen Gewichtes des gefüllten Behältnisses 2 bei dessen Freigabe zur Entleerung ein plötzliches Kippen des Behältnisses 2 zu verhindern, ist der Seilzug 30 über ein Bewegungdämpfungselement 33 geführt und sind ausserdem zusätzlich auf das Klinkensystem als Lastmomentausgleich wirkende Ausgleichsfedern 34 angeordnet. Der Klinkenhebel 27 ist mittels einer Arretierung 35 gegen eine unbeabsichtigte Betätigung gesichert. Gegen ungewollte Lageveränderungen des Behältnisses 2 bei dessen Transport mittels eines Hubstaplers ist ausserdem als Antirutschsicherung an den Auflagestellen des Rahmens 15 des Behältnisses 2 ein Antirutschmittel 36 in Form eines einen grossen Reibungskoeffizienten aufweisenden Reibungsbelages vorgesehen, so dass das Behältnis 2 beim Transport nicht vom transportierenden Hubstapler abrutschen kann. In Verbindung mit den Bügeln 23 für den Transport des Behältnisses 2 insbesondere mittels Hubstaplern sind ausserdem zusätzlich noch Füsse 37 vorgesehen, die den Transport auch mit Hilfe von anderen, hier nicht weiter beschriebenen Transportmitteln ermöglichen. Ausserdem sind zwecks Verbesserung der Mobilität des Behältnisses 2 selbst z. B. innerhalb eines Fabrikgebäudes die Rahmenrollen bzw. Hilfsrollen 16 des Rahmens 15 des Behältnisses 2 möglichst raumsparend, d.h. möglichst nahe dem Umriss des Rahmens 15 angeordnet, um dadurch auch das Traggestell 12 des Sauggeräts 3 möglichst raumsparend ausführen zu können.

Zwecks leichter Überwachbarkeit insbesondere eines aus Einrichtungen 1 und/oder Teilen 2 und 3 der Einrichtung 1 bestehenden Einrichtungssystemes erweist es sich als besonders vorteilhaft, am Behältnis 2 ein Füllstandsanzeigemittel 39 vorzusehen. Hierbei handelt es sich um einen biegsamen Schlauch aus transparentem Material, der zumindest an seinem oberen Ende 40 eine steckbare Kupplung 41 aufweist. Nach Lösung dieser steckbaren Kupplung 41 am oberen Ende 40 sowie gegebenenfalls erfolgendem Schliessen der dadurch freiwerdenden Öffnung im Behältnis 2 mittels eines Stopfens kann man durch Abbiegen des Schlauches 39 nach unten einen Auslass aus dem Behältnis 2 bilden, mittels dessen in nachstehend noch zu beschreibender Weise der separierte flüssige Anteil des im Behältnis 2 enthaltenen Abfallgutes direkt an die Quelle dieses Anteiles, wie Maschinen, zurückführbar ist. Selbstverständlich lässt sich bei Verwendung einer Steckkupplung anstatt des Füllstandanzeigemittels 39 auch ein Schlauch ankuppeln. In beiden Fällen lässt sich die vorher gereinigte Flüssigkeit wie z. B. Emulsion in einfacher Weise an die Maschinen zurückleiten. Im Bedarfsfall kann man bei an der Stelle 40 eingesetztem Stopfen einen der beiden vorgenannten Schläuche als zusätzlichen Flüssigkeitsansaugschlauch benutzen und gegebenenfalls anlässlich eines Maschinenservices die Einrichtung 1 als Entlastungspumpe einsetzen, indem man von der Maschine z. B. Emulsion absaugt. Dies ist allgemein bei flüssigem Abfallgut von Interesse, das nach der Entsorgung der Wiederverwendung zugeführt wird. Bei Verwendung des Schlauches 39 als Flüssigkeitsauslass erweist es sich bei gemischtem Abfallgut mit festen Anteilen als vorteilhaft, im Bereich dieses Auslasses im Inneren des Behältnisses 2 ein Schlammsieb 42 vorzusehen, um ein Verstopfen des Auslasses zu verhindern, vor allem wenn die Einrichtung 1 für die Aufbereitung von flüssigem Abfallgut eingesetzt wird, das aus dem Behältnis 2 unmittelbar der Wiederverwendung zugeführt wird.

In Fig. 3 sind in der schematischen Seitenansicht einer teilweisen stationären Einrichtung die in den Fig. 1 und 2 bereits dargestellten Teile wieder gleich wie in den letztgenannten Figuren bezeichnet. Ein wesentlicher Unterschied der Variante nach Fig. 3 im Vergleich mit der Ausführung nach Fig. 1 besteht darin, dass das Behältnis 2 mittels Hilfsrollen 16 auf der vorzugsweise waagrechten Fussbodenebene 45 steht, so dass die durch die Dichtkante 24 des Behältnisses 2 bestimmte Ebene unter einem spitzen Winkel zur Fussbodenebene 45 geneigt ist. Die gleich geneigte Dichtfläche 46 des mittels der Gestellbeine 14 stationär angeordneten Deckels 4 passt bei entsprechend darunter gefahrenem Behältnis 2 genau auf deren Dichtkante 24, wobei eine nicht näher dargestellte Dichtung dazwischengeschaltet sein kann. Unter Ausnützung dieser Gegebenheit erübrigt sich bei dieser Variante der Einrichtung 1 in vorteilhafter Weise die Absenk- sowie Anhebhydraulik 13, weil durch entsprechendes Zuführen des Behältnisses 2 eine hermetisch dichtende Verbindung zwischen dem Behältnis 2 einerseits und dem Sauggerät 3 andererseits erreicht wird. Unter Umständen können an den bodenseitigen Enden 47 der Gestellbeine 14 in der Fig. 3 nicht dargestellte Hilfsrollen angeordnet sein, um durch relativ geringfügige wechselseitige Korrekturbewegungen die hermetische Abdichtung der Teile 2 und 3 gegebenenfalls noch zu verbessern bzw. leichter lösen zu können, indem durch einen mittels des Sauggeräts 3 erzeugbaren geringen Unterdruck bereits ein sehr grosser Anpressdruck zwischen den Teilen 2 und 3 bewirkt werden kann, der zum Lösen der hermetischen Dichtung wieder aufgehoben werden muss.

In Fig. 4 sind in der schematischen Seitenansicht sowie teilweisen Schnittdarstellung einer Einrichtung 1 die den in Fig. 3 dargestellten Teilen entsprechende Teile gleich wie in Fig. 3 bezeichnet, wobei aus Gründen der besseren Übersicht insbes. das Traggestell 12 der Einrichtung 1 weggelassen worden ist. Ein weiteres Ziel gemäss der Erfindung besteht in der Vorselektierung der Abfallgutanteile der Abfallgüter, die je nach Einsatz bei verschiedenen Produktionsmitteln bzw. Maschinen bei verschiedenen Industriezweigen mit verschiedenen Abfallstoffen angereichert sind. Im wesentlichen handelt es sich hierbei um feste, flüssige und staubförmige Anteile, die mittels der Einrichtung 1 bereits getrennt und gegebenenfalls wieder aufbereitet den Quellen der Abfallgüter möglichst zurückgeführt bzw. ihrer Wiederverwertung zugeführt werden. Bei dieser Selektion der Abfallgutanteile ist der Filter 5 hinsichtlich der festen und flüssigen Anteile möglichst zu entlasten. Mittels des Behältnisses 2 kann bereits unter Ausnützung der unterschiedlichen Raumform der Abfallgutanteile durch Gravitationsabscheidung bei Ersparnis von zuzuführender Energie zumindest eine Vorselektion der festen und flüssigen Anteile des jeweiligen Abfallgutes erfolgen. Zur Trennung des mittels des Sauggeräts 3 der Einrichtung 1 durch den oder die Schläuche 48 sowie die Abfallguteintritte 9 in das Behältnis bzw. die Mulden 2 eingesaugten Abfallgutes ist primär wenigstens ein Filterkorb 49 mit wählbarem Maschengitter 50 vorgesehen, der der Aufnahme der festen Abfallgutanteile, wie Metallspäne, dient, wogegen die flüssigen Anteile des jeweiligen Abfallgutes sich im unteren Teil des Behältnisses 2 sammeln. Je nach Anfall der flüssigen sowie der festen Anteile ruht der Filterkorb 49 erfahrungsgemäss auf entsprechend hohen Abstützungen 51, so dass eine möglichst vollständige Trennung der flüssigen von den festen Anteilen erfolgt. Der Filterkorb 49 ist mittels Distanzteilen 52 mit Abstand von den Wänden des Behältnisses 2 angeordnet, um das Abfliessen bzw. Abtropfen des flüssigen Anteiles 53 möglichst unbehindert durch bzw. vom festen Anteil 54 des Abfallgutes zu ermöglichen bzw. zu erleichtern, wogegen der Feinstoff bzw. Schwebstoffanteil, wie Staub, mittels des Filters 5 somit durch pneumatische bzw. mechanische Einwirkung abgeschieden wird. Zufolge der beschriebenen Ausführung gern. Fig. 4 können mittels des Filterkorbes 49 der feste Anteil 54 des Abfallgutes einer hierfür vorgesehenen Feststoffmulde 2 zugeführt und der flüssige Anteil 53, wie z. B. Emulsion, zur Anteilwiedergewinnung in umweltschonender Weise, insbes. wie bereits im Zusammenhang mit Fig. 2 beschrieben, an die Flüssigkeitsquellen, wie Maschinen, mittels wenigstens eines Auslasses am Behältnis bzw. der Mulde 2 sowie mittels Leitungen, wie Schläuche, zurückgeleitet oder aus dem jeweiligen Behältnis 2 abgesaugt und wieder verwendet werden.

In Fig. 5 ist die Parallelperspektive eines in das Behältnis 2 einsetzbaren Filterkorbes 49 mit wählbarem Maschengitter 50 dargestellt. Der Korb 49 ist oben offen und übernimmt ausserdem die Stützfunktion für darin einsetzbare Filtersäcke bzw. feinmaschige Gewebe 55, die je nach zu erwartendem Abfallgut die verschiedensten Feinstrukturen aufweisen können.

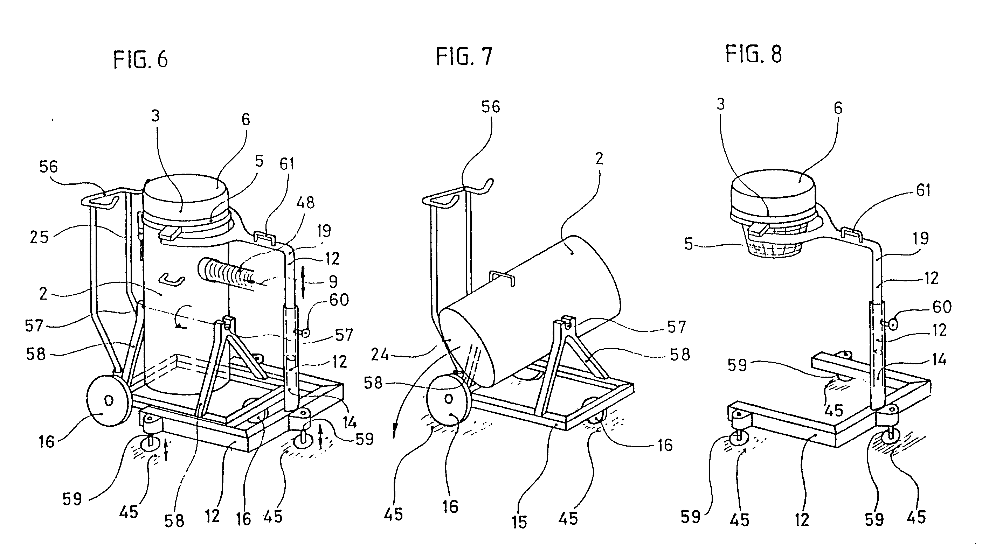

In den Fig. 6, 7 und 8 ist jeweils in Parallelperspektive eine weitere Variante der Einrichtung 1 in Leichtbauausführung zur händischen Betätigung für relativ geringere Abfallgutmengen abgebildet, wobei die einzelnen Teile wieder wie in den vorhergehenden Figuren bezeichnet sind.

Figur 6 zeigt eine komplette Variante der Einrichtung 1 die in ihren wesentlichen Teilen der Ausführung gemäss der Fig. 1 entspricht. Ein Stossbügel mit Handgriffen zur händischen Bewegung der Einrichtung 1 ist mit 56, das Behältnis in Form einer Tonne ist wieder mit 2 bezeichnet. Diese weist Halterungen 57 auf, mittels der sie mit Hilfe von auf dem Rahmen 15 angeordneten Tragböcken 58 kippbar gelagert ist. Das Traggestell 12 hat justierbare Gestellabstützungen 59, mittels der das Sauggerät 3 stationär auf der Fussbodenebene 45 aufruht. Der verschiebbare Beinteil 19 ist mit Hilfe einer händisch betätigbaren Fixierschraube 60 am Gestell 12 in seiner wirksamen Länge veränderlich fixierbar und weist zu seiner Längeneinstellung einen Einstellgriff 61 auf. Die dargestellte Variante der Einrichtung 1 ist im wesentlichen wieder in ein Behältnis bzw. Tonne 2 und in ein Sauggerät 3 unterteilbar, das mittels des Gestelles 12 stationär aufstellbar ist, so dass zur Entleerung des Behältnisses 2 nur dieses allein weggeführt werden muss. Selbstverständlich können am Gestell 12 in der Fig. 6 nicht dargestellte Hilfsrollen 11 angeordnet sein. Die Variante nach den Fig. 6 bis 8 betrifft eine Ausführung für kleinere Abfallgutmengen, deren Handhabung aus Gewichtsgründen durch eine Einzelperson nicht erfolgen kann.

In Figur 7 ist das Behältnis 2 samt dem dieses tragenden sowie befördernden Rahmen 15 in gekippter Lage in Entladungsposition dargestellt.

Figur 8 zeigt den Abfallgutförderteil 3 samt Traggestell 12 allein.

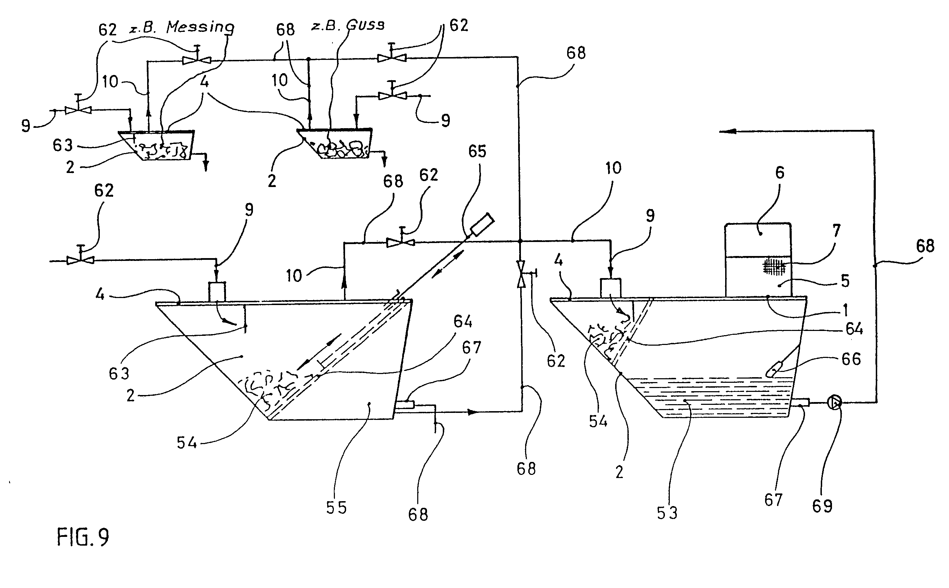

In Figur 9 ist in Seitenansicht ein Schema einer Anordnung von Behältnissen 2 sowie einer kompletten Einrichtung 1 abgebildet. Hierbei sind die Positionsbezeichnungen aus den vorhergehend beschriebenen Figuren übernommen. Zur abfallgutmässigen Betreuung von grösseren Produktionsstätten, Fabriken aber auch von kleineren Anlagen erweist es sich in jeder Hinsicht, also sowohl in organisatorischer, technischer und nicht zuletzt kostenmässiger Sicht als vorteilhaft, ein Einrichtungssystem vorzusehen, das zumindest eine komplette, sehr grosse Einrichtung 1 mit grosser Leistungsfähigkeit aufweist, an die eine hinreichende Anzahl von Behältnissen 2 mit ausreichender Grösse vermittels Leitungen, wie Schläuche oder Rohre, über Absperrorgane 62 angeschlossen und hierbei die Behältnisse 2 sowie die Einrichtung 1 mittels Deckel 4 abgeschlossen sind. Im Schema sind die Abfallguteintritte wieder mit 9, die Saugzugluftausgänge mit 10, Prallbleche in den Behältnissen 2 mit 63, als Ersatz von Filterkörben 49 in den Behältnissen 2 schräg angeordnete Vorabscheid- bzw. Abscheidsroste mit 64, Reinigungsrechen mit 65, als Ein- bzw. Ausschaltorgane für das Saugzuggebläse 6 dienende Schwimmer in 2 mit 66, der jeweilige Flüssigkeitsauslass des Behältnisses 2 mit 67, die Leitungen bzw. Rohren zu bzw. zwischen den Behältnissen 2 und von diesen zur kompletten zentralen Einrichtung 1 sowie die an den Flüssigkeitsauslass 67 angeschlossene Leitung bzw. Rohr mit 68 und ein Ventil in der am Flüssigkeitsauslass 67 angeschlossenen Leitung mit 69 bezeichnet. In Ergänzung zu den bisher erläuterten Teilen bei Einrichtungen 1 erweist es sich weiter als vorteilhaft, im Bereich der Abfallguteintritte 9 Prallbleche 63 vorzusehen, wenn in Folge von Schwankungen des Saugzuges sowie ausserdem bei Einsatz von Leitungen mit unterschiedlichem freien Querschnitt grössere Geschwindigkeiten bzw. Geschwindigkeitsänderungen im Fluss der angesaugten Abfallgüter mit gemischter Konsistenz auftreten, um vor allem die festen Anteile 54 des Abfallgutes gezielt in einem Bereich des jeweiligen Behältnisses 2 ablagern zu lassen und zugleich dem flüssigen Anteil 53 des Abfallgutes den Weg durch einen Vorabscheid- oder Abscheidrost 64 in den übrigen Teil des jeweiligen Behältnisses 2 freizuhalten. In Verbindung mit solchen Abscheidrosten 64 können auch Reinigungsrechen 65 vorgesehen sein, um Verstopfungen verhüten bzw. beseitigen zu können. Solche im jeweiligen Behältnis 2 in schräger Lage angeordnete Abscheidroste 64 und Reinigungsrechen 65 bilden eine Ersatzvariante für einen im jeweiligen Behältnis 2 eingesetzten Filterkorb 49, so dass der im jeweiligen Behältnis 2 sich rasch sammelnde Flüssgkeitsanteil 53 des Abfallgutes, wie z. B. eine von Feststoffanteilen ausreichend gereinigte bzw. bei Einsatz eines entsprechend durchlässigen Filters hinreichend filtrierte Emulsion durch nicht näher eingezeichnete Auslässe abgelassen bzw. abgepumpt und der jeweiligen Maschine wieder zugeleitet und dadurch wiederverwertet werden kann, ohne dass hierbei die weiterlaufende Abfallförderung in das betreffende Behältnis 2 unterbrochen werden muss. Für den Fall eines schellen Ansteigens des Flüssigkeitsanteiles 53 im jeweiligen Behältnis 2 ist es weiter von Vorteil, einen Schwimmer 66 in dem den Anteil 53 beinhaltenden Bereich des Behältnisses 2 vorzusehen, um zusammen mit einem durch diesen auslösbaren, nicht näher dargestellten Meldekontakt in Verbindung mit einer Signalleitung in an sich bekannter Weise das jeweilige Saugzuggebläse 6 rechtzeitig ausschalten zu können, um dadurch ein Ansteigen des Flüssigkeitsanteiles 53 in den Filter 5 sowie das Saugzuggebläse 6 sicher zu vermeiden und zugleich das Ablassen bzw. Rückführen des Anteiles 53 gegebenenfalls mittels der gleichen Signalleitung zumindest auszulösen, um den Abscheidevorgang des Staubes bzw. von Kleinstpartikeln mittels des Filters 5 durch Stillstehen des Gebläses 6 nicht unerwünscht lange zu unterbrechen bzw. deren Absinken in den flüssigen Anteil 53 zu verhindern. Als weiterer Vorteil des Einsatzes der vorbeschriebenen Einrichtungen 1 bzw. deren Teilen 2 und 3 ergibt sich, dass bei entsprechender Ausnützung der Behältnisse 2 diese kleiner, leichter und somit billiger ausgeführt werden können und eine Entleerung der festen Anteile 54 zusammen mit den flüssigen Anteilen 53 durch Absaugen mittels der zentralen Einrichtung 1 durch Teilentleerungen der jeweiligen festen Anteile der jeweiligen Behältnisse 2 insbesondere mittels Filterkörben 49 tunlichst reduziert und dadurch die zentrale Einrichtung 1 entlastet werden kann, aber auch die Standortveränderungen der Behältnisse 2 zum Entleeren der festen Anteile 54 auf ein Minimum reduzierbar sind, und die flüssige Anteile 53 auf kürzestem Wege aufbereitet und der Wiederverwertung zugeführt werden können. Bei einem solchen Einrichtungssystem ist zwar eine relativ grosse Einrichtung 1 mit hinreichend grosser Leistungsfähigkeit notwendig, jedoch mit dem überwiegenden Vorteil, dass bei den übrigen Einrichtungen 1, das Sauggerät 3 jeweils eingespart werden kann. Ein Einrichtungssystem der vorbeschriebenen Art ist nicht nur durch seine örtliche Mobilität, sondern auch durch seine Funktionsfähigkeit insbesondere in verbindungsmässiger Sicht bzgl. seiner Teile sowie hinsichtlich der Saugzug- bzw. Förderwirkung in Sicht auf das jeweils aufzunehmende, zu trennende, wiederaufzubereitende und rückzuführende bzw. abzuführende bzw. in Sicht auf die zu schützende Umwelt zu eliminierende Abfallgut durch das Zusammenwirken des Sauggeräts 3 mit den einzelnen Absperrorganen 62 in den Leitungen 68 und den Abfallgutein- und Ausgängen 9 sowie 10 und Auslässen 67 relativ einfach und leicht an die jeweiligen betrieblichen Randbedingungen anpassbar.

Ein zentraler Vorteil der Erfindung ist schliesslich darin zu sehen, dass mittels der in vorbeschriebenen Weise unterteilbaren Einrichtung 1 ein sowohl in örtlicher als auch funktioneller Anpassung unterteiltes Einrichtungssystem hinsichtlich seines Betriebes, der Wartung, der Überwachung, des Personalaufwandes in wirtschaftlichster Weise erstellt und betrieben werden kann, was durch Einsatz von bisher bekannten Einrichtungen zur Aufnahme und Beförderung von Abfallgut nicht erreichbar ist.

**Patentansprüche**

1. Einrichtung zur Aufnahme von Abfallgut über einen Abfallguteintritt (9) in einem Behältnis (2) zum Sammeln mindestens eines Teils des Abfallgutes und mit einem dem Behältnis (2) nachgeschalteten Sauggerät (3) zum Erzeugen eines Unterdrucks in dem Behältnis (2), dadurch gekennzeichnet, daß das Sauggerät (3) lösbar mit dem Behältnis (2) verbunden und auf einem eigenen Traggestell (12) angeordnet ist und daß das Behältnis (2) auf einem eigenen, verfahrbaren Tragrahmen (15) angeordnet ist, so daß das Behältnis (2) nach Trennung von dem Sauggerät (3) unabhängig verfahrbar ist.

2. Einrichtung nach Anspruch 1, dadurch gekennzeichnet, daß das Behältnis (2) im wesentlichen als Mulde oder Tonne ausgebildet ist, die eine für die Trennung, Rückgewinnung oder Adsorption von flüssigen, festen, partikelförmigen oder gasförmigen Abfallgutanteilen erforderliche Raumform aufweist.

3. Einrichtung nach Anspruch 1 oder 2, dadurch gekennzeichnet, daß das Behältnis (2) Mittel (49; 64) zur Trennung unterschiedlicher Abfallgutanteile (53, 54) enthält.

4. Einrichtung nach Anspruch 3, dadurch gekennzeichnet, daß das Behältnis (2) durch einen Filterkorb (49) mit Abstützungen (51) wählbarer Länge zur Anpassung an die anfallenden Abfallgutanteile in einen Raum für flüssigen Abfallgutanteil (53) und einen Raum (49) für festen Abfallgutanteil (54) unterteilt ist.

5. Einrichtung nach einem der Ansprüche 1 bis 4, dadurch gekennzeichnet, daß das Behältnis (2) durch einen lösbaren Deckel (4) hermetisch abgeschlossen ist, der den Abfallguteintritt (9) und einen Saugzugausgang (10) aufweist.

6. Einrichtung nach Anspruch 5, dadurch gekennzeichnet, daß das Sauggerät (3) auf dem Deckel (4) angeordnet ist.

7. Einrichtung nach einem der Ansprüche 1 bis 6, dadurch gekennzeichnet, daß zwischen dem Behältnis (2) und dem Saugzuggebläse (6) des Sauggeräts (3) ein Filter (5) angeordnet ist.

8. Einrichtung nach einem der Ansprüche 1 bis 7, dadurch gekennzeichnet, daß das Sauggerättraggestell (12) verfahrbar ist.

9. Einrichtung nach einem der Ansprüche 1 bis 8, dadurch gekennzeichnet, daß das Sauggerät-Traggestell (12) eine Absenk- und Anhebhydraulik (13) zur Verkürzung und Verlängerung von teleskopartig ausgebildeten Gestellbeinen (14) aufweist.

10. Einrichtung nach einem der Ansprüche 1 bis 9, dadurch gekennzeichnet, daß das Behältnis (2) kippbar auf seinem Tragrahmen (15) angeordnet ist.

11. Einrichtung nach Anspruch 10, dadurch gekennzeichnet, daß eine Fixierklinke (29) zum Fixieren des Behältnisses (2) in der ungekippten Lage, eine in Richtung ihrer Schließstellung federbelastete Stabilisierungsklinke (26) zum Halten des Behältnisses (2) in der gekippten Lage und ein Betätigungsmechanismus (27, 28, 31, 30, 38) zum Betätigen sowohl der Fixierklinke (29) als auch der Stabilisierungsklinke (26) vorgesehen ist.

12. Einrichtung nach einem der Ansprüche 1 bis 11, dadurch gekennzeichnet, daß an der Rückwand (44) des Behältnisses (2) mittels steckbarer Kupplungen (41) ein transparenter, biegbarer Schlauch (39) angebracht ist, der als Füllstandsanzeige dient und nach Lösen einer der beiden Kupplungen (41) als Auslaß oder Einlaß von flüssigem Abfallgut verwendbar ist.

13. Einrichtung nach einem der Ansprüche 1 bis 12, dadurch gekennzeichnet, daß an das Behältnis (2) mehrere weitere Behältnisse (2) über Saugzugleitungen (68) angeschlossen sind, wobei die weiteren Behältnisse (2) jeweils durch einen Deckel (4) abgeschlossen sind und einen Abfallguteintritt (9) sowie einen Saugzugausgang (10) aufweisen.

## Claims

1. A means for receiving waste material via a waste material entry (9) in a container (2) for collecting at least part of the waste material and having a suction device (3) disposed downstream of the container (2) for producing a negative pressure in the container (2) characterized in that the suction device (3) is releasably connected to the container (2) and is disposed on a supporting structure (12) of its own, and in that the container (2) is disposed on a movable supporting frame (15) of its own so that the container (2), upon release from the suction device (3), is independently movable.

2. A means according to claim 1, characterized in that the container (2) is designed substantially as a trough or barrel having a three-dimensional configuration as required for the separation, recycling or adsorption of liquid, solid, particulate or gaseous waste material shares.

3. A means according to claim 1 or 2, characterized in that the container (2) has means (49; 64) for separating different waste material shares (53, 54).

4. A means according to claim 3, characterized in that the container (2) is divided into a space for liquid waste material shares (53) and a space (49) for solid waste material shares (54) by means of a filter basket (49) having supports (51) of selectable length for adaptation to the respectively present waste material shares.

5. A means according to any of claims 1 to 4, characterized in that the container (2) is hermetically sealed by means of a releasable cover (4) including the waste material entry (9) and a suction draught exit (10).

6. A means according to claim 5, characterized in that the suction device (3) is arranged on the cover (4).

7. A means according to any of claims 1 to 6, characterized in that a filter (5) is disposed between the container (2) and the suction draught fan (6) of the suction device (3).

8. A means according to any of claims 1 to 7, characterized in that the suction device supporting structure (12) is movable.

9. A means according to any of claims 1 to 8, characterized in that the suction device supporting structure (12) has a lowering and lifting hydraulic system (13) for shortening and lengthening telescopically designed supporting structure legs (14).

10. A means according to any of claims 1 to 9, characterized in that the container (2) is disposed in tiltable manner on its supporting frame (15).

11. A means according to claim 10, characterized in that there are provided a fixing catch (29) for fixing the container (2) in the untilted position, a stabilizing catch (26) spring-loaded in the direction of its closed position for holding the container (2) in the tilted position, as well as an actuating mechanism (27, 28, 31, 30, 38) for actuating both the fixing catch (29) and the stabilizing catch (26).

12. A means according to any of claims 1 to 11, characterized in that a transparent flexible hose (39) is attached to the rear wall (44) of the container (2) by means of pluggable couplings (41), said hose (39) serving as filling level indicator and being usable as outlet or inlet for liquid waste material upon release of one of the two couplings (41).

13

13. A means according to any of claims 1 to 12, characterized in that several additional containers (2) are connected to the container (2) via suction draught lines (68), said additional containers (2) being each closed by a cover (4) and each having a waste material entry (9) as well as a suction draught exit (10).

**Revendications**

1. Dispositif pour recueillir des déchets par une entrée de déchets (9) dans un récipient (2) destiné à collecter au moins une partie des déchets, comportant un appareil d'aspiration (3) monté à la suite du récipient (2) pour produire une dépression dans le récipient (2), caractérisé en ce que l'appareil d'aspiration (3) est relié de façon amovible avec le récipient (2) et est disposé sur son propre bâti porteur (12), et en ce que le récipient (2) est placé sur son propre châssis porteur déplaçable (15), de sorte qu'une fois séparé de l'appareil d'aspiration (3), le récipient (2) peut être déplacé indépendamment.

2. Dispositif selon la revendication 1, caractérisé en ce que le récipient (2) est réalisé sous forme de benne ou de tonneau, qui présente une forme tridimensionnelle nécessaire pour la séparation la récupération eu l'absorption de fractions de déchets liquides, solides, en forme de particules ou gazeux.

3. Dispositif selon la revendication 1 ou 2, caractérisé en ce que le récipient (2) comporte des moyens (49; 64) pour séparer des fractions de déchets différentes (53, 54).

4. Dispositif selon la revendication 3, caractérisé en ce que le récipient (2) est divisé, par un panier filtre (49) muni de supports (51) dont on peut choisir la longueur pour l'adaptation aux fractions de déchets arrivant, en un volume pour la fraction de déchets liquides et un volume (49) pour la fraction de déchets solides (54).

5. Dispositif selon l'une des revendications 1 à 4, caractérisé en ce que le récipient (2) est hermétiquement fermé par un couvercle amovible (4), qui comporte l'entrée de déchets (9) et une sortie d'aspiration (10).

6. Dispositif selon la revendication 5, caractérisé en ce que l'appareil d'aspiration (3) est disposé sur le couvercle (4).

7. Dispositif selon l'une des revendications 1 à 6, caractérisé en ce qu'un filtre (5) est disposé entre le récipient (2) et le ventilateur d'aspiration (6) de l'appareil d'aspiration (3).

8. Dispositif selon l'une des revendications 1 à 7, caractérisé en ce que le bâti porteur (12), de l'appareil d'aspiration est déplaçable.

14

9. Dispositif selon l'une des revendications 1 à 8, caractérisé en ce que le bâti porteur (12) de l'appareil d'aspiration comporte un vérin hydraulique de levée et de descente (13) pour raccourcir et allonger des pieds de bâti (14) télescopiques.

10. Dispositif selon l'une des revendications 1 à 9, caractérisé en ce que le récipient (2) est disposé basculant sur son châssis porteur (15).

11. Dispositif selon la revendication 10, caractérisé en ce qu'on prévoit un cliquet de blocage (29) pour bloquer le récipient (2) dans la position non basculée, un cliquet de stabilisation (26), assujetti à un ressort dans le sens de sa position fermée, pour maintenir le récipient (2) dans la position basculée, et un mécanisme d'actionnement (27, 28, 31, 30, 39) pour actionner aussi bien le cliquet de blocage (29) que le cliquet de stabilisation (26).

12. Dispositif selon l'une des revendications 1 à 11, caractérisé en ce qu'on fixe sur la paroi postérieure (44) du récipient (2) au moyen de raccords enfichables (41) un tuyau souple transparent flexible (39) qui sert d'indicateur de niveau de remplissage et peut être utilisé, après avoir dégagé l'un des deux raccords (41), de sortie ou d'entrée des déchets liquides.

13. Dispositif selon l'une des revendications 1 à 12, caractérisé en ce que plusieurs autres récipients (2) sont raccordés au récipient (2) par l'intermédiaire de canalisations d'aspiration (68), les autres récipients (2) étant respectivement fermés par un couvercle (4) et comportant une entrée des déchets (9) ainsi qu'une sortie d'aspiration (10).

FIG. 1

FIG.2

FIG. 3

9
6
5
24
3
4
46
1
44
2
43
14
14
45
16    15    47    16    47

FIG. 4

48
9    54    55    6
5
2    8
52    50
52
49    49
67
68
16    15    51    53    51    16

FIG. 5

8
55
50 , grob, Stülzfunktion
49

FIG.8

FIG.7

FIG.6

FIG.9

z.B. Messing    z.B. Guss

EP 0 204 879 B1